Europäisches Patentamt

European Patent Office

Office européen des brevets

(19)

(11) Publication number: **0 258 943 B1**

# EUROPEAN PATENT SPECIFICATION

(12)

(45) Date of publication of patent specification: **08.04.92**

(51) Int. Cl.⁵: **C10J 3/46**, C10J 3/48, C01B 3/32

(21) Application number: **87201636.5**

(22) Date of filing: **28.08.87**

(54) Process and apparatus for the preparation of synthesis gas.

(30) Priority: **29.08.86 GB 8620994**

(43) Date of publication of application:
**09.03.88 Bulletin 88/10**

(45) Publication of the grant of the patent:
**08.04.92 Bulletin 92/15**

(84) Designated Contracting States:
**DE GB IT NL**

(56) References cited:
DE-A- 2 705 558      DE-B- 1 217 014
GB-A- 673 164        GB-A- 2 065 497
US-A- 2 931 715      US-A- 3 988 123
US-A- 4 310 333      US-A- 4 314 826
US-A- 4 377 132      US-A- 4 436 530

The Oil and Gas Journal, September 6, 1971,
pp. 85-90

(73) Proprietor: **SHELL INTERNATIONALE RE-
SEARCH MAATSCHAPPIJ B.V.
Carel van Bylandtlaan 30
NL-2596 HR Den Haag(NL)**

(72) Inventor: **Van der Burgt, Maarten Johannes
Carel van Bylandtlaan 30
NL-2596 HT Den Haag(NL)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services

EP 0 258 943 B1

## Description

The invention relates to a process and apparatus for the preparation of synthesis gas by the partial combustion of a carbon-containing fuel with an oxygen-containing gas in a reactor wherein the synthesis gas obtained is discharged through an outlet at the bottom of the reactor and is fed through a waste heat boiler connected to and located essentially vertically below the reactor and wherein slag is removed through the outlet in the bottom of the reactor and passed by gravity through a slag discharge means extending inside or alongside the waste heat boiler, into a water bath where it is cooled by quenching.

The partial combustion of carbon-containing fuel with substantially pure oxygen as oxygen-containing gas yields synthesis gas mainly consisting of carbon monoxide and hydrogen. When the oxygen-containing gas is air or oxygen-enriched air, the synthesis gas formed of course also contains a substantial quantity of nitrogen. By carbon-containing fuel is generally meant coal or another solid fuel, such as brown coal, peat, wood, coke, soot etc, but liquid fuels, such as tar sand oil or shale oil, and mixtures of liquid and/or particulate solid fuels, and hydrocarbon gases, are also possible.

Advantageously, a moderator is also introduced into the reactor. The object of the moderator is to exercise a moderating effect on the temperature on the reactor. This is ensured by endothermic reaction between the moderator and the reactants of the synthesis gas preparation. Suitable moderators are steam and carbon dioxide.

The gasification is advantageously carried out at a temperature in the range from 1200 to 1700 °C and at a pressure in the range from 1 to 200 bar.

The reactor in which the preparation of synthesis gas takes place may have the shape of a sphere, cone, block or a cylinder. Advantageously the reactor mainly has the shape of a circular cylinder.

The supply of carbon-containing fuel and oxygen-containing gas to the reactor can take place in any manner suitable for the purpose. However, both the fuel and the oxygen-containing gas and the moderator are advantageously supplied through the wall of the reactor in pairs of burners. This is advantageously performed by means of at least two burners arranged symmetrically in relation to the reactor axis.

Liquid slag formed in the partial combustion reaction drops down and is drained through the outlet located in the reactor bottom.

To remove the slag from the gasifying process, it is already known to arrange a quenching water bath at the bottom of the gasifying vessel, in which water bath the slag descending due to its gravity, is captured, quenched, and forms glassy granules. The slag particles are periodically or continuously removed from the water bath by means of conventional arrangements.

Further, it has already been proposed to locate a waste heat boiler essentially vertically below the reactor in such a way that slag, ash and product gas are leaving the gasifier through only one opening (outlet) in the gasifier bottom.

It is an object of the invention to provide a process and an apparatus for producing synthesis gas wherein the capacity of such waste heat boiler per unit gas produced is increased.

The invention therefore provides a process for producing synthesis gas by the partial combustion of a carbon-containing fuel with an oxygen-containing gas in a reactor wherein the synthesis gas obtained is discharged through an outlet at the bottom of the reactor and is fed through a waste heat boiler connected to and located essentially vertically below the reactor and wherein slag is removed through the outlet in the bottom of the reactor and passed by gravity through a slag discharge means extending inside or alongside the waste heat boiler into a water bath where it is further cooled by water, and a quench medium is supplied to said slag discharge means and is contacted with the slag leaving the reactor through said slag discharge means, characterized in that the quench medium is contacted countercurrently with the slag falling by gravity into the water bath, in such a manner that the heat contained in the slag is reintroduced in the partial combustion process and wherein the arrangement of the waste heat boiler is such that the gas mixture in the waste heat boiler flows downwards and co-currently with the ash and slag stream but spatially separated therefrom, whereby the slag and ash discharge means and the waste heat boiler are disposed in a coaxial arrangement such that the inner circle of this coaxial arrangement forms the slag and ash discharge means and the gas mixture flows in an annulus formed around said discharge means and wherein the downstream end of the cooling channel for the gas mixture (annulus around the slag and ash discharge means) is not in fluid communication with the slag and ash discharge means so that the gas mixture leaves the waste heat boiler at its downstream end separated from the slag and ash stream.

The invention also provides an apparatus for the partial combustion of a carbon-containing fuel with an oxygen-containing gas, which apparatus comprises a reactor which is equipped with a gas outlet at the bottom and a waste heat boiler connected to and located essentially vertically below the reactor, and a slag discharge means extending inside or alongside the waste heat boiler and debouching into a water bath and a supply means is present for supplying a quench medium to said slag discharge means in such a way that the quench medium is contacted with the slag leaving the reactor through said slag discharge means characterized by means for supplying a quench medium countercurrently with the slag and wherein the arrangement of the waste heat boiler is such that the gas mixture in the waste heat boiler flows downwards and co-currently with the ash and slag stream but spatially separated therefrom, whereby the slag and ash discharge means and the waste heat boiler are disposed in a coaxial arrangement such that the inner circle of this coaxial arrangement forms the slag and ash discharge means and the gas mixture flows in an annulus formed around said discharge means and wherein the downstream end of the cooling channel for the gas mixture (annulus around the slag and ash discharge means) is not in fluid communication with the slag and ash discharge means so that the gas mixture leaves the waste heat boiler at its downstream end separated from the slag and ash stream.

In an advantageous embodiment of the present invention steam is produced from boiling water in the water bath and can be first used to cool the slag when leaving the gasifier and passing by gravity into the water bath and subsequently used as an additional quench gas for quenching the product gas.

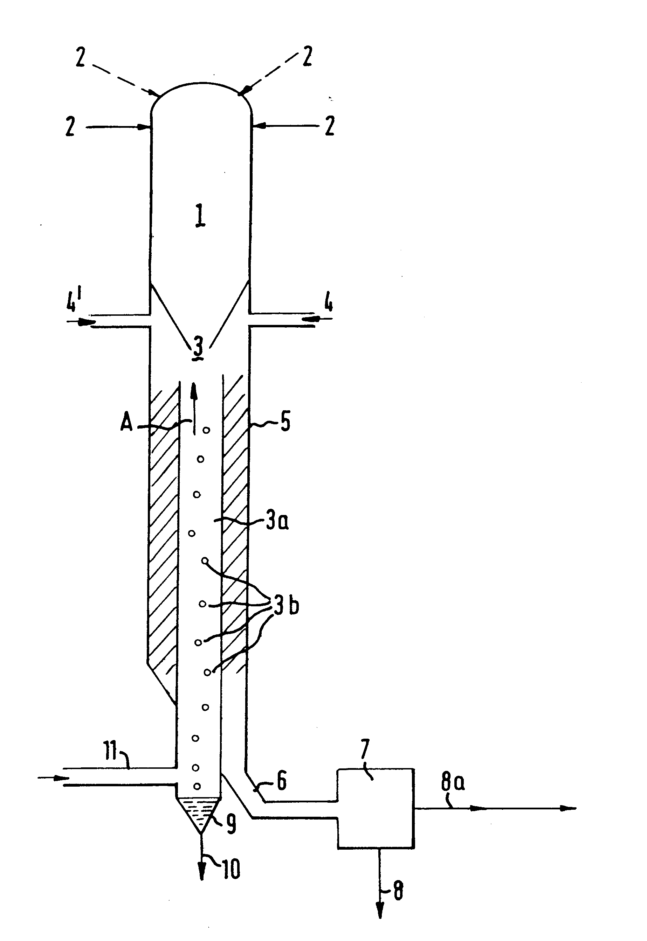

The invention will now be described in more detail by way of example with reference to the accompanying drawing, in which the figure schematically represents a longitudinal section of an apparatus according to the invention.

Referring now to the figure a longitudinal section of a gasifier or reactor 1, provided with a plurality of burners 2 has been represented. At the bottom of the gasifier the product gas can be quenched by any quench medium suitable for the purpose, if desirable. Such quench medium, for example gas, can be supplied through any suitable line 4,4'. The product gas leaving the gasifier via an outlet 3 is fed through a waste heat boiler 5 comprising cooling means such as coils or panels for indirect heat transfer (schematically represented in longitudinal section by the shading) which is suitably connected to and vertically located below the gasifier 1. The waste heat boiler as such is not part of the present invention and will not be described in detail, since its operation is known to those skilled in the art.

The product gas leaving the waste heat boiler through an outlet means 6 can advantageously be supplied to a suitable means 7 for (dry) solids removal, in which ash is discharged via a line 8.

Dust-free gas leaving the means 7 through a line 8a may be processed further in any suitable way for the purpose.

Slag (represented by reference numeral 3b) leaving the gasifier 1 at the outlet 3 passes by gravity via a slag discharge 3a to a water bath 9. The slag discharge 3a is vertically located below the outlet 3 of the gasifier 1 and is advantageously surrounded by the outer shell of the waste heat boiler. The pressures prevailing in the gasifier, waste heat boiler and slag discharge are such that discharge of product gas from the reactor into the slag discharge 3a is prevented. Such process features just as constructional features are not part of the present invention and will not be described or shown in the figure for reasons of clarity. Through any suitable supply means 11 any suitable quench medium can be supplied to the slag discharge means 3a, for example before the slag is contacted with the water in the water bath, in such a way that the slag leaving the gasifier through the outlet 3 is contacted with the said quench medium countercurrently. (Recycle) gas or steam can for example be used as a quench medium. The water bath temperature can be such that the water bath 9 contains boiling water. After the boiling water bath the slag is passing via line 10 to a slag lockhopper (not shown). It will be appreciated that any suitable slag removal system can be applied.

The boiling water in the bath 9 produces steam (arrow A) which can be used to cool the slag when leaving the gasifier and passing by gravity into the water bath. The said steam and/or additional steam and/or gas passing through line 11 may further be used as an additional quench gas for quenching the product gas at the outlet 3. In this way the heat contained in the slag leaving the reactor is used for raising steam in the waste heat boiler thus increasing the overall thermal efficiency of the process.

It will be appreciated that in an advantageous embodiment of the invention the slag discharge means 3a may be extending alongside the waste heat boiler.

Further, it will be appreciated that in an advantageous embodiment of the present invention the sizing and process conditions of the configuration as described earlier are as follows: unit capacity: 1000 t/d Illinois No. 6 coal; process conditions of gas ex gasifier: 5.40 $m^3$/s, 25 bar , 1450 °C; process conditions of recycle gas used as quench medium: 1.75 $m^3$/s, 26 bar , 200 °C; diameter of gasifier: 2.5-3.0 m, length of gasifier: 5-8 m, diameter of gasifier exit: 0.8-1.2 m, diameter of slag discharge means: 0.8-1.2 m, diameter of waste heat boiler: 1.5-1.8 m and length of waste heat boiler: 15-25 m.

Various modifications of the present invention will become apparent to those skilled in the art from the foregoing description and accompanying drawing. Such modifications are intended to fall within the scope of the appended claims.

## Claims

1. A process for producing synthesis gas by the partial combustion of a carbon-containing fuel with an oxygen-containing gas in a reactor wherein the synthesis gas obtained is discharged through an outlet at the bottom of the reactor and is fed through a waste heat boiler connected to and located essentially vertically below the reactor and wherein slag is removed through the outlet in the bottom of the reactor and passed by gravity through a slag discharge means extending inside or alongside the waste heat boiler into a water bath where it is further cooled by water, and a quench medium is supplied to said slag discharge means and is contacted with the slag leaving the reactor through said slag discharge means, characterized in that the quench medium is contacted countercurrently with the slag falling by gravity into the water bath, in such a manner that the heat contained in the slag is reintroduced in the partial combustion process and wherein the arrangement of the waste heat boiler is such that the gas mixture in the waste heat boiler flows downwards and co-currently with the ash and slag stream but spatially separated therefrom, whereby the slag and ash discharge means and the waste heat boiler are disposed in a coaxial arrangement such that the inner circle of this coaxial arrangement forms the slag and ash discharge means and the gas mixture flows in an annulus formed around said discharge means and wherein the downstream end of the cooling channel for the gas mixture (annulus around the slag and ash discharge means) is not in fluid communication with the slag and ash discharge means so that the gas mixture leaves the waste heat boiler at its downstream end separated from the slag and ash stream.

2. The process as claimed in claim 1 characterized by the step of producing steam from boiling water in the water bath, said steam being first used to cool the slag and subsequently as an additional quench gas of the product gas.

3. An apparatus for the partial combustion of a carbon-containing fuel with an oxygen-containing gas, which apparatus comprises a reactor which is equipped with a gas outlet at the bottom and a waste heat boiler connected to and located essentially vertically below the reactor, and a slag discharge means extending inside or alongside the waste heat boiler and debouching into a water bath and a supply means is present for supplying a quench medium to said slag discharge means in such a way that the quench medium is contacted with the slag leaving the reactor through said slag discharge means characterized by means for supplying a quench medium countercurrently with the slag and wherein the arrangement of the waste heat boiler is such that the gas mixture in the waste heat boiler flows downwards and co-currently with the ash and slag stream but spatially separated therefrom, whereby the slag and ash discharge means and the waste heat boiler are disposed in a coaxial arrangement such that the inner circle of this coaxial arrangement forms the slag and ash discharge means and the gas mixture flows in an annulus formed around said discharge means and wherein the downstream end of the cooling channel for the gas mixture (annulus around the slag and ash discharge means) is not in fluid communication with the slag and ash discharge means so that the gas mixture leaves the waste heat boiler at its downstream end separated from the slag and ash stream.

## Revendications

1. Procédé de production de gaz de synthèse par combustion partielle d'un combustible contenant du carbone avec un gaz contenant de l'oxygène dans un réacteur dans lequel le gaz de synthèse obtenu est déchargé par un orifice au fond du réacteur et est chargé à travers une chaudière de récupération des chaleurs perdues reliée à et située sensiblement verticalement en-dessous du réacteur et où les scories sont enlevées par l'orifice au fond du réacteur et où on les fait passer par gravité à travers un organe de décharge des scories s'étendant à l'intérieur ou le long de la chaudière de récupération des chaleurs perdues dans un bain d'eau où elles sont encore refroidies par l'eau, et un milieu de trempe est fourni audit organe de décharge des scories et est mis en contact avec les scories qui quittent le réacteur à travers ledit organe de décharge des scories, caractérisé en ce qu'on met le milieu de trempe en contact à contre-courant avec les scories tombant par gravité dans le bain d'eau, de manière telle que la chaleur contenue dans les scories soit réintroduite dans le procédé de combustion partielle, et où la disposition de la chaudière de récupération des chaleurs perdues est telle que le mélange gazeux dans la chaudière de récupération des chaleurs perdues s'écoule vers le bas et en même temps que le courant de cendres et de scories mais spatialement séparé de lui, ce qui fait que l'organe de décharge de cendres et de scories et la chaudière de récupération des chaleurs perdues sont disposés dans un arrangement coaxial de manière que le cercle interne de cette disposition coaxiale forme l'organe de décharge des scories et des cendres et que le mélange gazeux s'écoule dans un anneau formé autour dudit organe de décharge et où l'extrémité aval du canal de refroidissement pour le mélange gazeux (anneau ou partie annulaire autour de l'organe de décharge des scories et des cendres) n'est pas en communication fluide avec l'organe de décharge des scories et des cendres de manière que le mélange gazeux quitte la chaudière de récupération des chaleurs perdues à son extrémité aval séparée du courant de scories et de cendres.

2. Procédé selon la revendication 1, caractérisé par l'étape de production de vapeur à partir d'eau bouillante dans le bain d'eau, ladite vapeur étant utilisée tout d'abord pour refroidir les scories, puis comme gaz de trempe additionnel du gaz produit.

3. Appareil pour la combustion partielle d'un combustible contenant du carbone avec un gaz contenant de l'oxygène, lequel appareil comprend un réacteur qui est équipé d'un orifice de sortie de gaz en son fond et d'une chaudière de récupération des chaleurs perdues reliée à et située essentiellement verticalement en-dessous du réacteur, et d'un organe de décharge des scories s'étendant à l'intérieur ou le long de la chaudière de récupération des chaleurs perdues et débouchant dans un bain d'eau, et où un moyen d'alimentation est présent pour fournir un milieu de trempe audit organe de décharge des scories de manière telle que le milieu de trempe soit mis en contact avec les scories qui quittent le réacteur à travers ledit organe de décharge des scories, caractérisé par des moyens pour fournir un milieu de trempe à contre-courant avec les scories et où la disposition de la chaudière de récupération des chaleurs perdues est telle que le mélange gazeux dans la chaudière de récupération des chaleurs perdues s'écoule vers le bas et en même temps que le courant de cendres et de scories mais spatialement séparé de lui, où l'organe de décharge des scories et des cendres et la chaudière de récupération des chaleurs perdues sont disposés dans un arrangement coaxial de manière que le cercle interne de cet arrangement coaxial forme l'organe de décharge des scories et des cendres et que le mélange gazeux s'écoule dans une partie annulaire formée autour dudit organe de décharge et où l'extrémité aval du canal de refroidissement pour le mélange gazeux (partie annulaire située autour de l'organe de décharge des scories et des cendres) n'est pas en communication fluide avec l'organe de décharge des scories et des cendres de manière que le mélange gazeux quitte la chaudière de récupération des chaleurs perdues à son extrémité aval séparée du courant de scories et de cendres.

**Patentansprüche**

1. Ein Verfahren zur Herstellung von Synthesegas durch Teilverbrennung eines kohlenstoffhaltigen Brennstoffes mit einem sauerstoffhaltigen Gas in einem Reaktor, in welchem das erhaltene Synthesegas durch einen Auslaß am Boden des Reaktors abgezogen wird und durch einen Abwärmeboiler geleitet wird, der mit dem Reaktor verbunden und im wesentlichen senkrecht unter diesem angeordnet ist, und in welchem durch den Auslaß am Boden des Reaktors Schlacke abgezogen wird und mittels Schwerkraft durch eine Schlacke-Entsorgungsvorrichtung geleitet wird, die sich innerhalb oder längs neben dem Abwärmeboiler bis in ein Wasserbad erstreckt, wo sie durch Wasser weiter abgekühlt wird, und in welchem ein Abschreckmedium zu der genannten Schlacke-Entsorgungsvorrichtung geleitet wird und mit der Schlacke kontaktiert wird, die den Reaktor über die genannte Schlacke-Entsorgungsvorrichtung verläßt, **dadurch gekennzeichnet,** daß das Abschreckmedium im Gegenstrom mit der infolge der Schwerkraft in das Wasserbad fallenden Schlacke kontaktiert wird, und zwar derart, daß die in der Schlacke enthaltene Wärme in den Teilverbrennungsprozeß wieder eingebracht wird, und wobei der Abwärmeboiler so angeordnet ist, daß die Gasmischung im Abwärmeboiler nach unten und im Gleichstrom mit dem Asche- und Schlackestrom, aber räumlich davon getrennt, strömt, wobei die Schlacke- und Asche-Entsorgungsvorrichtung und der Abwärmeboiler koaxial angeordnet sind derart, daß der innere Kreis dieser koaxialen Anordnung die Schlacke- und Asche-Entsorgungsvorrichtungen bildet und die Gasmischung in einem um die genannten Entsorgungsvorrichtungen gebildeten Ringraum strömt und wobei das stromabwärts befindliche Ende des Kühlkanals für die Gasmischung (Ringraum um die Schlacke- und Asche-Entsorgungsvorrichtungen) mit den Schlacke- und Asche-Entworgungsvorrichtungen nicht in Fluidverbindung steht, so daß die Gasmischung den Abwärmeboiler an seinem stromabwärts befindlichen Ende getrennt vom Schlacke- und Aschestrom verläßt.

2. Das Verfahren nach Anspruch 1, gekennzeichnet durch die Verfahrensstufe der Erzeugung von Dampf aus siedendem Wasser im Wasserbad, wobei dieser Dampf zuerst zum Abkühlen der Schlacke und dann als zusätzliches Abschreckgas für das Produktgas verwendet wird.

3. Eine Vorrichtung zur Teilverbrennung eines kohlenstoffhaltigen Brennstoffes mit einem sauerstoffhaltigen Gas, welche Vorrichtung einen Reaktor, der mit einem Gasauslaß am Boden verstehen ist, sowie einen Abwärmeboiler, der mit dem Reaktor verbunden und im wesentlichen senkrecht unter dem Reaktor angeordnet ist und eine Schlacke-Entsorgungsvorrichtung umfaßt, die sich innerhalb oder längs des Abwärmeboilers erstreckt und in ein Wasserbad mündet,und bei der ferner Zuführungseinrichtungen zum Zuführen eines Abschreckmediums zu der genannten Schlackeentsorgungsvorrichtung vorgesehen sind derart, daß das Abschreckmedium mit der den Reaktor über die Schlacke-Entsorgungsvorrichtung verlassenden Schlacke kontaktiert wird, gekennzeichnet durch Mittel zum Zuführen eines Abschreckmediums im Gegenstrom mit der Schlacke und eine Anordnung des Abwärmeboilers derart, daß die Gasmischung im Abwärmeboiler nach unten und im Gleichstrom mit dem Asche- und Schlackestrom,aber räumlich davon getrennt, strömt, durch die koaxiale Anordnung der Schlacke- und Asche-Entsorgungsvorrichtungen und des Abwärmeboilers derart, daß der innere Kreis dieser koaxialen Anordnung die Schlacke- und Asche-Entsorgungsvorrichtungen bildet und der Kühlkanal für die Gasmischung (Ringraum um die Schlacke- und Asche-Entsorgungsvorrichtungen) nicht in Fluidverbindung mit der Schlacke- und Asche-Entsorgungsvorrichtung steht, so daß die Gasmischung den Abwärmeboiler an seinem stromabwärts befindlichen Ende, vom Schlacke- und Aschestrom getrennt, verläßt.